# EUROPÄISCHE PATENTSCHRIFT

(11) **EP 3 612 750 B1**
(45) Veröffentlichungstag und Bekanntmachung des Hinweises auf die Patenterteilung: **01.07.2020**
(21) Anmeldenummer: 18721674.2
(22) Anmeldetag: 11.04.2018
(51) Int. Cl.: F16G 5/08, F16G 5/20

(54) **VERZAHNTER KEILRIEMEN**
TOOTHED V-BELT
COURROIE TRAPÉZOÏDALE DENTÉE

(30) Priorität: 20.04.2017 DE 102017108425
(43) Veröffentlichungstag der Anmeldung: 26.02.2020
(73) Patentinhaber: Arntz Beteiligungs GmbH & Co. KG, 37671 Höxter (DE)
(72) Erfinder: SCHMIDT, Philipp, 37671 Höxter (DE); GRAWE, Hermann, 37671 Höxter (DE)
(74) Vertreter: Gramm, Lins & Partner Patent- und Rechtsanwälte PartGmbB
(86) Internationale Anmeldenummer: PCT/DE2018/100338
(87) Internationale Veröffentlichungsnummer: WO 2018/192620

(56) Entgegenhaltungen:
- EP-A1- 2 811 202
- WO-A1-2010/002433
- US-A- 3 830 113
- US-A1- 2010 279 808

## Beschreibung

Die Erfindung betrifft einen, insbesondere flankenoffenen, verzahnten Keilriemen gemäß dem Oberbegriff von Anspruch 1.

Derartige verzahnte Keilriemen sind beispielsweise aus der WO 2010/002433 A1 bekannt und werden in Keilriementrieben mit Keilriemenscheiben verwendet. Damit der Keilriementrieb ein möglichst großes Übersetzungsverhältnis haben kann, muss eine Riemenscheibe einen kleinen effektiven Durchmesser haben. Das wiederum bedeutet, dass der Keilriemen für den Betrieb mit Riemenscheiben mit möglichst kleinem Durchmesser geeignet sein sollte. Dazu werden flankenoffene Keilriemen verwendet, da sie - im Vergleich zu ummantelten Keilriemen - biegefreudig sind. Eine weitere Anforderung an Keilriemen ist, dass sie eine möglichst hohe Lebensdauer haben sollten. Zudem sollten möglichst große Kräfte übertragbar sein. Diese drei Forderungen stehen in Konkurrenz zueinander. Es ist in anderen Worten nicht möglich, alle drei Forderungen gleichzeitig zu optimieren.

Nachteilig an diesem bekannten flankenoffenen Keilriemen ist insbesondere, dass sie keinen Betrieb mit einer sogenannten Rückenrolle erlauben. Rückenrollen haben den Vorteil, dass eine Vorspannung aufgebracht und ein Umschlingungswinkel des Keilriemens um die Riemenscheibe erhöht werden kann.

Aus der DE 11 2009 002 092 ist ein Keilrippenriemen mit einer hohen Verschleißfestigkeit bekannt.

Ein Keilrippenriemen mit V-förmigen Rippenflanken ist in der EP 2 811 202 A1 beschrieben.

Der Erfindung liegt die Aufgabe zugrunde, einen verbesserten Keilriemen vorzuschlagen.

Die Erfindung löst das Problem durch einen Keilriemen, bei dem für eine Steghöhe h zwischen einer neutralen Faser des Zugstrangs und dem Zahngrund einerseits und für eine Riemengesamthöhe H zwischen der Zahnspitze und einer Riemenrückenfläche des Riemenrückens die Beziehung 0,40 ≤ h/H ≤ 0,45 gilt. Vorzugsweise gilt 0,42 ≤ h / H.

Vorzugsweise gilt zudem für die Steghöhe und den Zahngrund-Krümmungsradius R_{G} die Beziehung 2 ≤ h / R_{G} ≤ 2,16, insbesondere 2 ≤ h / R_{G} ≤ 2,15.

Vorteilhaft an einem derartigen Keilriemen ist, dass er sowohl eine hohe Steifigkeit in Querrichtung hat und damit große Drehmomente übertragen werden können und dass andererseits die Biegespannung im Zahngrund bei Verwendung einer Rückenrolle klein ist und dadurch der Rissbildung im Zahngrund vorgebeugt wird. Das erhöht die Lebensdauer des Keilriemens.

Im Rahmen der vorliegenden Beschreibung wird unter dem Zugstrang derjenige Teil des Keilriemens verstanden, der zum Aufnehmen der anliegenden Zugkraft ausgebildet ist. Beispielsweise umfasst der Zugstrang ein oder mehrere Fäden, die beispielsweise aus Polyester und/oder Aramid bestehen können.

Diese sind beispielsweise in eine Matrix eingebettet. Beispielsweise besteht die Matrix aus Ethylen-Propylen-Dien-Kautschuk (EPDM) und/oder Chloropren-Kautschuk.

Der Riemenrücken kann beispielsweise ein Deckgewebe aufweisen.

Der Kern ist derjenige Abschnitt des Keilriemens, der beim Einsatz nach radial innen weist. In anderen Worten hat die Zahnspitze den größten Abstand zum Zugstrang, der Zahngrund ist derjenige Bereich der Verzahnung, der den geringsten Abstand zum Zugstrang hat.

Unter dem Zahngrund-Krümmungsradius wird der Radius desjenigen Ausgleichskreises verstanden, der über einen Anpasswinkel von zumindest 60° die beste Approximation der Kontur der Verzahnung hat.

Unter der Riemengesamthöhe wird insbesondere der Abstand zwischen der Zahnspitze und der Riemenrückenfläche des Riemenrückens verstanden.

Verallgemeinert löst die Erfindung das Problem durch einen Keilriemen mit den Merkmalen (a) bis (e) gemäß Anspruch 1. Für diesen Keilriemen ist vorteilhaft, nicht aber notwendig, dass das Merkmal (f) erfüllt ist.

Vorzugsweise handelt es sich bei dem Keilriemen um einen Schmalkeilriemen oder einen Standardkeilriemen. Ein Schmalkeilriemen hat ein Breite-zu-Höhe-Verhältnis von B/H = 1,1 bis 1,4. Ein Standardkeilriemen hat ein Breite-zu-Höhe-Verhältnis von B/H = 1,4 bis 1,8.

Gemäß einer bevorzugten Ausführungsform gilt für einen Zahnspitzen-Krümmungsradius Rs zwischen der Zahnspitze und der ersten Zahnflanke sowie für die Steghöhe h 1,55 ≤ h / R_{S} ≤ 2,15. Es hat sich herausgestellt, dass dieser Wertebereich, insbesondere zusammen mit dem Wertebereich für h / H, zu einer besonders geringen Rissneigung im Zahngrund beim Betrieb mit einer Rückenrolle führt, ohne dass das maximal auf einen solchen Keilriemen übertragbare Drehmoment übermäßig negativ beeinflusst wird.

Vorzugsweise gilt für eine Teilung t, den Zahnspitzen-Krümmungsradius R_{S} und den Zahngrund-Krümmungsradius R_{G} die Beziehung 2,1 ≤ t / (R_{G} + R_{S}) ≤ 2,15. Ein Keilriemen, der diese Forderung erfüllt, zeichnet sich durch eine hohe Dauerlauftauglichkeit aus, ohne dass das übertragbare Drehmoment signifikant eingeschränkt wird. Unter der Teilung wird insbesondere der Versatz verstanden, um den zwei benachbarte Zähne gegeneinander versetzt sind. In anderen Worten ist die Teilung insbesondere der Quotient aus Länge des (aufgeschnittenen) Keilriemens als Zähler und der Anzahl der Zähne als Nenner.

Erfindungsgemäß ist zudem ein Keilriementrieb mit einem erfindungsgemäßen Keilriemen sowie einer treibenden Riemenscheibe und einer Getrieberiemenscheibe, wobei der Keilriemen die beiden Riemenscheiben miteinander verbindet. Vorzugsweise besitzt der Keilriementrieb eine Rückenrolle, die zum Spannen des Keilriemens angeordnet ist. Ein derartiger Aufbau ist mit Keilriemen nach dem Stand der Technik nicht möglich, da das Risiko der Rissbildung zu groß ist.

Vorzugsweise ist der Keilriemen ein Schmalkeilriemen.

Die Erfindung löst das Problem durch die Verwendung eines oben genannten Keilriemens in einem Keilriementrieb mit einer treibenden Riemenscheibe und einer getriebenen Riemenscheibe sowie einer Rückenrolle.

Die oben angegebenen Beziehungen für die einzelnen Kenngrößen des Keilriemens basieren auf einer Analyse des Spannungszustands am Zahngrund auf Basis eines FEM-Modells.

Im Folgenden wird die Erfindung anhand der beigefügten Zeichnungen näher erläutert. Dabei zeigt
- Figur 1a: einen erfindungsgemäßen Keilriementrieb mit einem erfindungsgemäßen Keilriemen,
- Figur 1b: eine perspektivische Teilansicht des allgemeinen Aufbaus eines Keilriemens und
- Figur 1c: einen Querschnitt durch einen Zahn eines nicht-erfindungsgemäßen Keilriemens gemäß Figur 1b und
- Figur 2: in den Teilfiguren 2a und 2b, Querschnitte durch Zähne von nicht-erfindungsgemäßen Keilriemen und in den Teilfiguren 2c und 2d Querschnitte durch Zähne von erfindungsgemäßen Keilriemen.

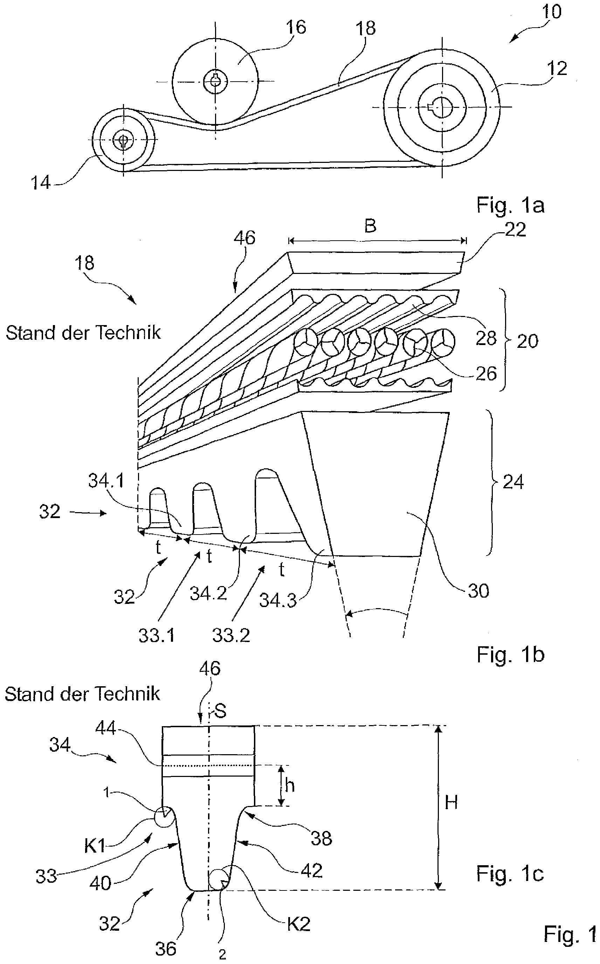

Figur 1a zeigt einen erfindungsgemäßen Keilriementrieb 10 mit einer treibenden Riemenscheibe 12, einer getriebenen Riemenscheibe 14, einer Rückenrolle 16 und einem erfindungsgemäßen Keilriemen 18. Die treibende Riemenscheibe 12 ist von einem nicht eingezeichneten Motor angetrieben.

Figur 1b zeigt eine geschnittene Teil-Ansicht des Keilriemens 18, der einen Zugstrang 20, einen Riemenrücken 22, der aus einem Deckgewebe besteht, sowie einen Kern 24 aufweist. Der Zugstrang 20 umfasst zumindest einen Faden 26, beispielsweise aus Polyester, der in einer Matrix 28, die auch als Einbettmischung bezeichnet werden könnte, eingebettet ist. Der Keilriemen 18 hat unbeschichtete seitliche Flanken, die einen Flankenwinkel γ miteinander bilden.

Der Kern 24 umfasst einen Riemenunterbau 30 und eine Verzahnung 32.Die Verzahnung 32 ist durch eine Mehrzahl an Zähnen 34.1, 34.2, ... gebildet.

Figur 1c zeigt einen Zahn 34 (Bezugszeichen ohne Zählsuffix beziehen sich stets auf alle entsprechenden Objekte), der eine Zahnspitze 36 aufweist.

Figur 1c zeigt zudem eine neutrale Faser 44, bei der es sich um eine gedachte Fläche handelt, die sich bei einer Änderung der Krümmung des Keilriemens 18 (vgl. Figur 1a) weder dehnt noch staucht. Die neutrale Faser 44 verläuft im Zugstrang 20 im Faden 26 bzw. den Fäden 26.

Ein Zahngrund-Krümmungsradius R_{G} ist derjenige Radius eines Ausgleichskreises K1, der die Kontur der Verzahnung 32 im Zahnfuß 33 am besten approximiert. Die Approximation wird dabei berechnet über einen Anpasswinkel *α*₁, der zumindest 60° und vorzugsweise höchstens 90° beträgt. Der Zahnfuß ist der Bereich zwischen Zahngrund und Zahnflanke.

Auf gleiche Weise wird ein Zahnspitzen-Krümmungsradius Rs berechnet anhand eines zweiten Ausgleichskreises K2, der sich über einen zweiten Anpasswinkel *α*₂ von ebenfalls zumindest 60° und vorzugsweise höchstens 90° erstreckt. Der Zahn 34 ist symmetrisch zu einer Symmetrieebene S.

Eine Riemengesamthöhe H, die auch kurz Höhe genannt werden kann, ist der Abstand zwischen einer Riemenrückenfläche 46 und der Zahnspitze 36. Eine Steghöhe h ist der Abstand zwischen der neutralen Faser 44 und dem Zahngrund 38. Eine Breite B wird am Riemenrücken gemessen.

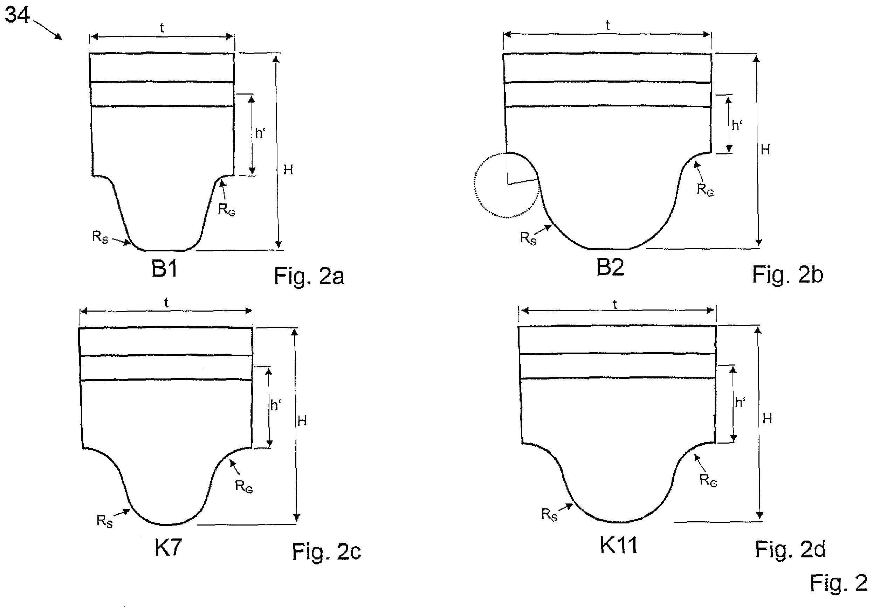

Figur 2 zeigt in der Teilfigur 2a einen Querschnitt eines Zahns 34 gemäß der Erfindung.

Figur 2b zeigt eine nicht-erfindungsgemäße Ausführungsform. Wie die untenstehende Tabelle zeigt, ergibt sich bei dieser Ausführungsform eine vergleichsweise hohe Querverformung, was zu einer verringerten Lebensdauer bei einem Einsatz ohne Rückenrolle führt.

| | Fig. 2a | Fig. 2b | Fig. 2c | Fig. 2d |
|---|---|---|---|---|
| h'/H | 0,45 | 0,32 | 0,44 | 0,42 |
| h' / R_{G} | 5,85 | 2,07 | 2,07 | 2,07 |
| h' / R_{S} | 4,18 | 0,92 | 2,27 | 1,57 |
| t / ( R_{G} + R_{S}) | 4,00 | 2,09 | 2,19 | 2,11 |
| Hauptspannung σ | 7,47 | 6,89 | 7,48 | 7,04 |
| Querverformung (mm) | -0,492 | -0,534 | -0,503 | -0,508 |
| an Riemenscheibe anliegende Fläche pro Zahn (mm²) | 11523 | 10965 | 11003 | 11016 |

Figur 2c zeigt eine erfindungsgemäße Ausführungsform, die eine günstige Querverformung aufweist.

Figur 2d zeigt einen optimalen Querschnitt, bei dem alle oben genannten Beziehungen erfüllt sind. Sowohl die Hauptspannung als auch die Querverformung liegen in einem optimalen Bereich.

### Bezugszeichenliste

- 10: Keilriementrieb
- 12: treibende Riemenscheibe
- 14: getriebene Riemenscheibe
- 16: Rückenrolle
- 18: Keilriemen

- 20: Zugstrang
- 22: Riemenrücken
- 24: Kern
- 26: Fäden
- 28: Matrix

- 30: Riemenunterbau
- 32: Verzahnung
- 33: Zahnfuß
- 34: Zahn
- 36: Zahnspitze
- 38: Zahngrund

- 40: erste Zahnflanke
- 42: zweite Zahnflanke
- 44: neutrale Faser
- 46: Riemenrückenfläche

- α: Anpasswinkel
- γ: Flankenwinkel
- B: Breite
- h: Steghöhe
- H: Riemengesamthöhe, Höhe
- K: Ausgleichskreis

- R_{G}: Zahngrund-Krümmungsradius
- R_{S}: Zahnspitzen-Krümmungsradius
- S: Symmetrieebene

## Patentansprüche

1. Verzahnter Keilriemen (18) mit
(a) einem Zugstrang (20),
(b) einem Riemenrücken (22) und
(c) einem Kern (24), der eine Verzahnung (32) aufweist, die eine Vielzahl an Zähnen hat,
(d) wobei jeder Zahn (34)
(i) eine Zahnspitze (36),
(ii) einen Zahngrund (38),
(iii) eine erste Zahnflanke (40),
(iv) eine zweite Zahnflanke (42) und
(v) in einem Zahnfuß (33) einen Zahngrund-Krümmungsradius R_{G} hat,
**dadurch gekennzeichnet, dass**
(e) für eine Steghöhe h zwischen einer neutralen Faser (44) des Zugstrangs (20) und dem Zahngrund (38) und
eine Riemengesamthöhe H zwischen der Zahnspitze und einer Riemenrückenfläche (46) des Riemenrückens (22) die Beziehung 0,40 ≤ h / H ≤ 0,45 gilt.

2. Verzahnter Keilriemen (18) nach Anspruch 1, **dadurch gekennzeichnet, dass** für einen Zahnspitzen-Krümmungsradius R_{S} zwischen der Zahnspitze (36) und der ersten Zahnflanke (40) sowie für die Steghöhe h die Beziehung 1,55 ≤ h / R_{S} ≤ 2,15 gilt.

3. Verzahnter Keilriemen (18) nach einem der vorstehenden Ansprüche,
**dadurch gekennzeichnet, dass**
für eine Teilung t, den Zahnspitzen-Krümmungsradius R_{S} und den Zahngrund-Krümmungsradius R_{G} die Beziehung 2,1 ≤ t / (R_{G} + R_{S}) ≤ 2,15 gilt.

4. Verzahnter Keilriemen (18) nach einem der vorstehenden Ansprüche,
**dadurch gekennzeichnet, dass** er flankenoffen ist.

5. Verzahnter Keilriemen (18) nach einem der vorstehenden Ansprüche,
**dadurch gekennzeichnet, dass** er ein Schmalkeilriemen ist.

6. Verzahnter Keilriemen (18) nach einem der vorstehenden Ansprüche,
**dadurch gekennzeichnet, dass** für die Steghöhe h und den Zahngrund-Krümmungsradius R_{G} die Beziehung 2 ≤ h / R_{G} ≤ 2,16 gilt.

7. Keilriementrieb mit
(a) einer treibenden Riemenscheibe (12),
(b) einer getriebenen Riemenscheibe (14) und
(c) einem Keilriemen (18) nach einem der vorstehenden Ansprüche.

8. Keilriementrieb nach Anspruch 7, **gekennzeichnet durch** eine Rückenrolle (16), die zum Spannen des Keilriemens (18) angeordnet ist.

## Claims

1. A toothed V-belt (18) with
(a) a tensile cord (20),
(b) a belt back (22) and
(c) a core (24), which features a toothing (32) with a multitude of teeth,
(d) wherein each tooth (34) has
(i) a tooth tip (36),
(ii) a tooth base (38),
(iii) a first tooth flank (40),
(iv) a second tooth flank (42) and
(v) a tooth base radius of curvature R_{G} in a tooth root (33),
**characterised by** the fact that
(e) for a base height h between a neutral fibre (44) of the tensile cord (20) and the tooth base (38) and
an overall belt height H between the tooth tip and a belt back surface (46) of the belt back (22), the relation 0.40 ≥ h / H ≥ 0.45 applies.

2. The toothed V-belt (18) according to claim 1, **characterised by** the fact that for a tooth tip radius of curvature R_{S} between the tooth tip (36) and the first tooth flank (40) as well as for the base height h, the relation 1.55 ≥ h / R_{S} ≤ 2.15 applies.

3. The toothed V-belt (18) according to one of the above claims, **characterised by** the fact that
for a spacing t, the tooth tip radius of curvature R_{S} and the tooth base radius of curvature R_{G}, the relation 2.1 ≥ t / (R_{G} + R_{S}) ≤ 2.15 applies.

4. The toothed V-belt (18) according to one of the above claims, **characterised by** the fact that it is raw-edged.

5. The toothed V-belt (18) according to one of the above claims, **characterised by** the fact that it is a narrow V-belt.

6. The toothed V-belt (18) according to one of the above claims, **characterised by** the fact that for the base height h and the tooth base radius of curvature R_{G}, the relation 2 ≥ h / R_{G} ≥ 2.16 applies.

7. A V-belt drive with
(a) a driving pulley (12),
(b) a driven pulley (14) and
(c) a V-belt (18) according to one of the above claims.

8. The V-belt drive according to claim 7, **characterised by** a back roller (16), which is arranged to tension the V-belt (18).

## Revendications

1. Courroie trapézoïdale dentée (18), comportant
(a) un brin de traction (20),
(b) un dos de courroie (22) et
(c) un cœur (24) présentant une denture (32) qui possède une multitude de dents,
(d) chaque dent (34) comprenant
(i) une pointe de dent,
(ii) un fond de dent (38),
(iii) un premier flanc de dent (40),
(iv) un second flanc de dent (42) et
(v) dans une racine de dent (33) un rayon de courbure de fond de dent R_{G},
**caractérisée en ce que**
(e) pour une hauteur d'âme h entre une fibre neutre (44) du brin de traction (20) et le fond de dent (38) et
pour une hauteur totale de la courroie H entre la pointe de dent et une surface de dos de courroie (46) du dos de courroie (22), s'applique la relation 0,40 ≤ h / H ≤ 0,45.

2. Courroie trapézoïdale dentée (18) selon la revendication 1, **caractérisée en ce que** pour un rayon de courbure de pointe de dent R_{S} entre la pointe de dent (36) et le premier flanc de dent (40) et pour la hauteur d'âme h, s'applique la relation 1,55 ≤ h / R_{S} ≤ 2,15.

3. Courroie trapézoïdale dentée (18) selon l'une des revendications précédentes, **caractérisée en ce que** pour un pas t, le rayon de courbure de pointe de dent R_{S} et le rayon de courbure de fond de dent R_{G}, s'applique la relation 2,1 ≤ t / (R_{G} + R_{S}) ≤ 2,15.

4. Courroie trapézoïdale dentée (18) selon l'une des revendications précédentes, **caractérisée en ce que** elle est à flanc ouvert.

5. Courroie trapézoïdale dentée (18) selon l'une des revendications précédentes, **caractérisée en ce que** elle est une courroie trapézoïdale étroite.

6. Courroie trapézoïdale dentée (18) selon l'une des revendications précédentes, **caractérisée en ce que** pour une hauteur d'âme h et le rayon de courbure de fond de dent R_{G}, s'applique la relation 2 ≤ h / R_{G} ≤ 2,16.

7. Entraînement à courroie trapézoïdale comportant
(a) une poulie menant (12),
(b) une poulie menée (14) et
(c) une courroie trapézoïdale (18) selon l'une des revendications précédentes.

8. Entraînement à courroie trapézoïdale selon la revendication 7, **caractérisé par** un galet dorsal (16) agencé pour tendre la courroie trapézoïdale (18).
